# EUROPEAN PATENT APPLICATION

(11) **EP 4 485 429 A1**
(43) Date of publication of application: **01.01.2025**
(21) Application number: 23382659.3
(22) Date of filing: 28.06.2023
(51) Int. Cl.: G09B 21/00, G06F 3/01

(54) **SYSTEM FOR AIDING A USER WITH A VISUAL FIELD LOSS**

(71) Applicant: Copysan Communicaciones, SL, 31192 Mutilva (ES)
(72) Inventor: SANTOS OLLOQUI, Jose, 31192 Mutilva (ES)
(74) Representative: Torner, Juncosa I Associats, SL

(57) **Abstract**

A system for aiding a user with a visual field loss is proposed. The system comprises a head mounted device (10); a portable computing device (13) having a camera and a software application; a processing unit (20); and a battery. When the user wears the head mounted device, the system captures, by the portable computing device (13), image data of the real-world environment; processes, by the processing unit (20), the captured image data using a, ROI,-based object tracking algorithm that detects objects in the captured image data; receives, by the software application, information regarding the detected objects together with information regarding a visual field loss experienced by the user; and displays, by the software application, a customized view mode of the real-world environment on a screen of the portable computing device (13), said customized view mode being tailored considering said information regarding the visual field loss experienced by the user.

## Description

### Technical Field

The present invention relates to a system for aiding users with a visual field loss, in particular homonymous hemianopsia.

### Background of the Invention

Document "Smart Assistive Technology for People with Visual Field Loss", Ola A. Younis, describes a tool that uses Epson Moverio BT-200 glasses. This tool aims to improve user safety by analyzing the visual environment in front of the user and identifying potential hazards such as moving cars. Once hazards are detected, the tool provides instructions to the user by displaying hazard notifications on the goggle screen. These notifications are classified into different classes according to the level of danger, prioritizing the importance of the dangerous situation. This innovation demonstrates the application of augmented reality glasses to improve situational awareness and provide real-time guidance to users in potentially hazardous environments.

### Description of the Invention

Present invention provides a system for aiding a user with a visual field loss. The system comprises, as known in the field: a portable computing device including at least one camera and a software application; a head mounted device including a case for the arrangement and support of the portable computer device and a fastening element to allow the case to be tied up to the face of the user; and a processing unit operatively connected to the portable computing device; and a battery.

Unlike the known proposals, the proposed system, when the user wears the head mounted device, is configured to perform, in real time, the following steps: capture, by the portable computing device, image data of the real-world environment; process, by the processing unit, the captured image data using a region of interest, ROI,-based object tracking algorithm that detects objects in the captured image data; receive, by the software application, from the processing unit, information regarding the detected objects together with information regarding a visual field loss experienced by the user and previously diagnosed; and display, by the software application, a customized view mode of the real-world environment on a screen of the portable computing device, said customized view mode being tailored taking into consideration said information regarding the visual field loss experienced by the user.

Such that, present invention, unlike the existing solutions/tools, offers custom view modes specifically designed to address the visual field loss suffered by the user. By tailoring the visual presentation to the specific needs of the user, present invention provides a more personalized and effective support experience.

In some embodiments, the system also comprises an audio alert system to provide an audible and/or visual signal to alert the user of the presence of objects within the environment.

In some embodiments, the audio alert system is included in the portable computing device.

In some embodiments, the ROI-based object tracking algorithm uses Yolov7 with TensorRT.

In some embodiments, the system also comprises a backpack or bag to store the processing unit and the battery.

In some embodiments, the visual field loss is homonymous hemianopsia.

In some embodiments, the homonymous hemianopsia is diagnosed by means of a visual campimetry test.

Through technical validation, the system has demonstrated remarkable performance in various conditions, including controlled environments and outdoor settings. It detects objects of different sizes and colors, ensuring reliable object recognition and tracking.

The proposed system has been successfully tested with different portable computing devices, checking its compatibility and adaptability to different platforms. This means that people can use their smartphones as part of the system, improving its accessibility and usability for a wider range of users.

The proposed system can be used for various applications and can be of significant economic importance.
- Assistive Technology for the Visually Impaired: The primary application of the system is to assist the visually impaired, particularly those with homonymous hemianopsia. By providing tracking and object detection capabilities and adapting the view mode through the screen of the computing device, the system improves the accessibility of visual information for those people. It allows them to navigate their environment more effectively, recognize objects, and enhance their overall viewing experience.
- Healthcare and Rehabilitation: Although the system is not a medical or healthcare product, it can be used in healthcare settings and rehabilitation centers to help patients with visual impairments. It can assist (in the sense of assisting a conventional medical diagnosis) in the diagnosis and monitoring of conditions such as homonymous hemianopsia, helping health professionals to provide appropriate care and treatment plans. In addition, it can be incorporated into visual rehabilitation programs to help patients recover as much as possible the life they had before suffering the hemianopsia.
- Occupational Support - People with visual impairments often face challenges in various occupational settings. The system can be valuable in workplaces where visual information is crucial, such as manufacturing, construction, or logistics.
- Independent Living and Mobility: The system promotes independent living for people with homonymous hemianopia by facilitating their ability to navigate and interact with their environment. It can aid in activities such as mobility, orientation, and object recognition, allowing people to participate in daily tasks, explore new environments, and participate more fully in society.

### Brief Description of the Drawings

The previous and other advantages and features will be more fully understood from the following detailed description of embodiments, with reference to the attached figures, which must be considered in an illustrative and non-limiting manner, in which:
Fig. 1 schematically illustrates the architecture of the proposed system.
Fig. 2 illustrates an example of a visual campimetry test.

### Detailed Description of the Invention and of Preferred Embodiments

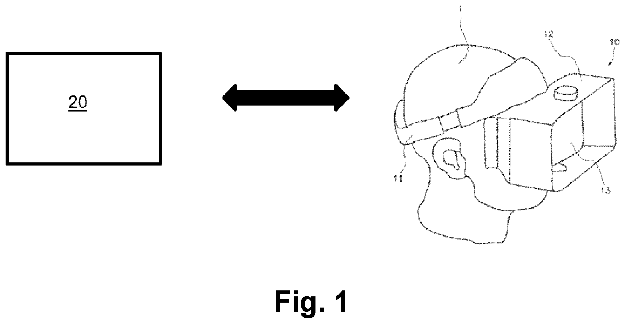

Present invention provides a system/tool that is specifically designed to help people visual field loss, in particular homonymous hemianopsia. This innovative solution, as can be seen in Fig. 1, combines a head mounted device 10, a portable computing device 13 (e.g. a smartphone), a processing unit 20 (e.g. a Jetson Nano), and a software application installed in the computing device 13 to provide real-time object detection, tracking and situational awareness capabilities. Using advanced algorithms and image processing techniques, present invention can help people with homonymous hemianopsia, or other similar visual impairments, navigate their environment with greater confidence and awareness.

The head mounted device 10 comprises a case 12 for the insertion and support of the portable computing device 13 and a fastening element 11, in this case embodied as a retaining strap, attached to the case 12, to allow the latter to be tied up to the face of the user 1.

Although not shown, the system also comprises one or more batteries to power up the processing unit 20. Both the processing unit and the battery/batteries can be securely placed in a backpack or bag, so the user can easily carry them once (s)he is wearing the head mounted device 13.

The proposed system works by capturing live video images using a camera/s of the computing device 13, by analyzing/processing the captured images in real time to detect and track objects (e.g. a car, a bench, a chair, a table, another user/pedestrian, etc.) within the user's field of vision (i.e. the real-world environment), and by displaying a customized view mode of the user's field of vision considering the visual field loss experienced by the user. That is, if the user suffers right homonymous hemianopsia, the customized view mode is design to display and emphasize the visual content on the left side of the field of view, and if the user suffers left homonymous hemianopsia, the customized view mode is design to display and emphasize the visual content on the right side of the field of view.

By providing those specialized/customized display modes, the systems empowers people with visual field loss to regain a fuller perception of their environment and facilitates better navigation and interaction in their daily lives. When users first start using the system, since it provides a compressed view of their environment, they may initially feel uncomfortable due to the unfamiliarity of the compressed image. However, with regular use and exposure to the compressed view, their brain has the potential to adapt and become more comfortable over time.

Particularly, the processing of the captures video frames is made by the processing unit including a YOLOv7 model with TensorRT for optimized performance. By leveraging the YOLOv7 model, the system can quickly and accurately identify objects within the visual input, ensuring reliable detection results. Additionally, the processing unit 20 uses region of interest (ROI) based object tracking. This feature allows prioritizing the objects closer to the user within the video frames, filtering irrelevant and distant information. By focusing on objects within the intact field of view, the system ensures that important visual information is highlighted and effectively presented to the user.

In some embodiments, the system is improved by incorporating an audio alert system, such that when objects are detected within the region of interest (ROI), the system sends audio alerts to the user, providing additional information and improving situational awareness.

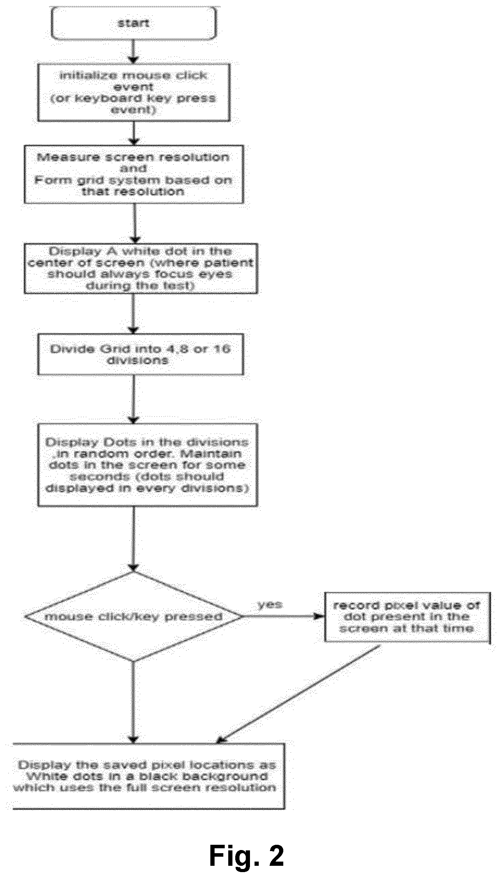

As said before, the proposed system is particularly designed to help people with homonymous hemianopsia. The system besides the above-mentioned functionalities can likewise accurately detect and classify the type of homonymous hemianopsia experienced by a user, as left or right homonymous hemianopsia. This capability is achieved through advanced algorithms that analyze visual input and identify specific patterns associated with homonymous hemianopsia. In particular, as can be seen in Fig. 2, a visual campimetry test has been created to enable said detection and classification of homonymous hemianopsia. Therefore, when performing the visual campimetry test, the system further uses additional elements connected to the processing unit 20 such that an USB camera, a monitor, a keyboard or mouse, headphones, etc.

The scope of the present invention is defined in the following set of claims.

## Claims

1. A system for aiding a user with a visual field loss, comprising:
- a portable computing device (13) including at least one camera and a software application;
- a head mounted device (10) including a case (12) for the arrangement and support of the portable computer device (13) and a fastening element (11) to allow the case (12) to be tied up to the face of the user (1);
- a processing unit (20) operatively connected to the portable computing device (13); and
- at least one battery;
**characterized in that** when the user wears the head mounted device, the system is configured to perform, in real time, the following steps:
capture, by the portable computing device (13), image data of the real-world environment;
process, by the processing unit (20), the captured image data using a region of interest, ROI,-based object tracking algorithm that detects objects in the captured image data;
receive, by the software application, from the processing unit (20), information regarding the detected objects together with information regarding a visual field loss experienced by the user and previously diagnosed; and
display, by the software application, a customized view mode of the real-world environment on a screen of the portable computing device (13), said customized view mode being tailored in view of said information regarding the visual field loss experienced by the user.

2. The system of claim 1, further comprising an audio alert system configured to provide an audible and/or visual signal to alert the user of the presence of objects within the environment.

3. The system of claim 2, wherein the audio alert system is included in the portable computing device (13).

4. The system of any one of the previous claims, wherein the ROI-based object tracking algorithm uses Yolov7 with TensorRT.

5. The system of any one of the previous claims, further comprising a backpack or bag to store the processing unit (20) and the battery.

6. The system of any one of the previous claims, wherein the visual field loss is homonymous hemianopsia.

7. The system of claim 6, wherein the homonymous hemianopsia is diagnosed by means of a visual campimetry test.
